# EUROPEAN PATENT APPLICATION

(11) **EP 4 668 843 A1**
(43) Date of publication of application: **24.12.2025**
(21) Application number: 23921912.4
(22) Date of filing: 16.02.2023
(51) Int. Cl.: H04W 28/02

(54) **METHOD FOR MULTIPLE PHYSICAL RANDOM ACCESS CHANNEL (PRACH) TRANSMISSIONS AND APPARATUS THEREFOR**

(71) Applicant: Beijing Xiaomi Mobile Software Co., Ltd., Beijing 100085 (CN)
(72) Inventor: QIAO, Xuemei, Beijing 100085 (CN)
(74) Representative: Stöckeler, Ferdinand
(86) International application number: PCT/CN2023/076617
(87) International publication number: WO 2024/168758

(57) **Abstract**

Disclosed in embodiments of the present application are a method for multiple physical random access channel (PRACH) transmissions and an apparatus therefor, applicable to a communication system. The method comprises: receiving configuration information configured by a network device, and on the basis of the configuration information, determining an independent first maximum number of retransmissions for multiple PRACH transmissions; and performing multiple PRACH transmissions according to the first maximum number of retransmissions. In the embodiments of the present application, a dedicated first maximum number of retransmissions may be determined or configured separately for multiple PRACH transmissions, and the resource conflict of the PRACH is reduced by separately configuring the first maximum number of retransmissions, thereby improving the access success probability of an RACH attempt.

## Description

### FIELD

The present disclosure relates to the field of communication technologies, in particular to a method and an apparatus for multiple PRACH transmissions.

### BACKGROUND

In order to enhance the coverage of a physical random access channel (PRACH), in the related art, PRACH transmission is repeated several times in a random access channel (RACH) attempt. In order to increase the probability of the access success of a terminal, a network device may configure a maximum retransmission number (*preambleTransMax*) of PRACH transmissions, and the terminal may make multiple access attempts according to the maximum retransmission number (*preambleTransMax*).

In practical applications, in a case that the configuration of the parameter *preambleTransMax* is unreasonable, even if the RACH attempt reaches the maximum retransmission number, the access may still be unsuccessful for the terminal with multiple PRACH transmissions enabled and poor channel conditions, which will cause long-term interference and waste of PRACH resources. In addition, the energy consumption of the terminal will be increased. Therefore, how to determine the maximum retransmission number *preambleTransMax* of multiple PRACH transmissions has become a problem to be solved.

### SUMMARY

Embodiments of the present disclosure provide a method and an apparatus for multiple PRACH transmissions, which may be applied to a communication field to solve problems of long-time interference and waste of PRACH resources.

In a first aspect, an embodiment of the present disclosure provides a method for multiple PRACH transmissions, which includes:
receiving configuration information configured by a network device, and determining a first maximum retransmission number of the multiple PRACH transmissions based on the configuration information; and
performing the multiple PRACH transmissions according to the first maximum retransmission number.

In this technical scheme, a dedicated first maximum retransmission number may be separately configured for the multiple PRACH transmissions, and a resource conflict of a PRACH may be reduced by separately configuring the first maximum retransmission number, thus improving the probability of the access success of a RACH attempt.

In a second aspect, an embodiment of the present disclosure provides another method for multiple PRACH transmissions, which includes:
receiving a first maximum retransmission number sent by a network device.

In a third aspect, an embodiment of the present disclosure provides a communication device, which has part or all of functions of the terminal for realizing the method described in the first aspect. For example, functions of the communication device may include functions of part or all of the embodiments in the present disclosure, or may include functions for independently implementing any one of the embodiments in the present disclosure. The functions may be realized by hardware, or by hardware executing corresponding software. The hardware or software includes one or more units or modules corresponding to the above functions.

In an implementation, the structure of the communication device may include a transceiving module and a processing module, and the processing module is configured to support the communication device to perform the corresponding functions in the above method. The transceiving module is used to support communication between the communication device and other devices. The communication device may further include a storage module for coupling with the transceiving module and the processing module, and storing necessary computer programs and data of the communication device.

As an example, the processing module may be a processor, the transceiving module may be a transceiver or a communication interface, and the storage module may be a memory.

In a fourth aspect, an embodiment of the present disclosure provides another communication device, which has part or all of functions of the network device for realizing the method described in the second aspect. For example, functions of the communication device may include functions of part or all of the embodiments in the present disclosure, or may include functions for independently implementing any one of the embodiments in the present disclosure. The functions may be realized by hardware, or by hardware executing corresponding software. The hardware or software includes one or more units or modules corresponding to the above functions.

In an implementation, the structure of the communication device may include a transceiving module and a processing module, and the processing module is configured to support the communication device to perform the corresponding functions in the above method. The transceiving module is used to support communication between the communication device and other devices. The communication device may further include a storage module for coupling with the transceiving module and the processing module, and storing necessary computer programs and data of the communication device.

In a fifth aspect, an embodiment of the present disclosure provides a communication device, which includes a processor, and when the processor calls a computer program in a memory, the method described in the first aspect is performed.

In a sixth aspect, an embodiment of the present disclosure provides a communication device, which includes a processor, and when the processor calls a computer program in a memory, the method described in the second aspect is performed.

In a seventh aspect, an embodiment of the present disclosure provides a communication device, which includes a processor and a memory. A computer program is stored in the memory. The processor executes the computer program stored in the memory, to cause the communication device to perform the method described in the first aspect.

In an eighth aspect, an embodiment of the present disclosure provides a communication device, which includes a processor and a memory. A computer program is stored in the memory. The processor executes the computer program stored in the memory, to cause the communication device to perform the method described in the second aspect.

In a ninth aspect, an embodiment of the present disclosure provides a communication device, which includes a processor and an interface circuit. The interface circuit is used to receive code instructions and transmit them to the processor, and the processor is used to execute the code instructions to cause the communication device to perform the method described in the first aspect.

In a tenth aspect, an embodiment of the present disclosure provides a communication device, which includes a processor and an interface circuit. The interface circuit is used to receive code instructions and transmit them to the processor, and the processor is used to execute the code instructions to cause the communication device to perform the method described in the second aspect.

In an eleventh aspect, an embodiment of the present disclosure provides a system for multiple PRACH transmissions, which includes the communication device described in the third aspect and the communication device described in the fourth aspect, or includes the communication device described in the fifth aspect and the communication device described in the sixth aspect, or includes the communication device described in the seventh aspect and the communication device described in the eighth aspect, or includes the communication device described in the ninth aspect and the communication device described in the tenth aspect.

In a twelfth aspect, an embodiment of the present disclosure provides a computer-readable storage medium for storing instructions for the terminal, and when the instructions are executed, the terminal is caused to perform the method described in the first aspect.

In a thirteenth aspect, an embodiment of the present disclosure provides a readable storage medium for storing instructions for the network device, and when the instructions are executed, the network device is caused to execute the method described in the second aspect.

In a fourteenth aspect, the present disclosure also provides a computer program product including a computer program, which, when run on a computer, causes the computer to perform the method described in the first aspect.

In a fifteenth aspect, the present disclosure also provides a computer program product including a computer program, which, when run on a computer, causes the computer to perform the method described in the second aspect.

In a sixteenth aspect, the present disclosure provides a chip system, which includes at least one processor and an interface, for supporting a terminal to realize the functions related to the first aspect, for example, determining or processing at least one of data and information related to the above method. In a possible design, the chip system further includes a memory for storing computer programs and data necessary for the network device. The chip system may be composed of chips, and may also include chips and other discrete devices.

In a seventeenth aspect, the present disclosure provides a chip system, which includes at least one processor and an interface, for supporting a network device to realize the functions related to the second aspect, for example, determining or processing at least one of data and information related to the above method. In a possible design, the chip system further includes a memory for storing computer programs and data necessary for the terminal. The chip system may be composed of chips, and may also include chips and other discrete devices.

In an eighteenth aspect, the present disclosure provides a computer program which, when run on a computer, causes the computer to execute the method described in the first aspect.

In a nineteenth aspect, the present disclosure provides a computer program which, when run on a computer, causes the computer to perform the method described in the second aspect.

### BRIEF DESCRIPTION OF THE DRAWINGS

In order to more clearly explain the technical scheme in embodiments of the present disclosure or the related art, the drawings needed in the embodiments of the present disclosure or the related art will be explained below.
Fig. 1 is a schematic architecture diagram of a communication system provided by an embodiment of the present disclosure.
Fig. 2 is a flowchart of a method for multiple PRACH transmissions provided by an embodiment of the present disclosure.
Fig. 3 is a flowchart of another method for multiple PRACH transmissions provided by an embodiment of the present disclosure.
Fig. 4 is a flowchart of another method for multiple PRACH transmissions provided by an embodiment of the present disclosure.
Fig. 5 is a flowchart of another method for multiple PRACH transmissions provided by an embodiment of the present disclosure.
Fig. 6 is a flowchart of another method for multiple PRACH transmissions provided by an embodiment of the present disclosure.
Fig. 7 is a flowchart of another method for multiple PRACH transmissions provided by an embodiment of the present disclosure.
Fig. 8 is a schematic diagram of another method for multiple PRACH transmissions provided by an embodiment of the present disclosure.
Fig. 9 is a schematic diagram of another method for multiple PRACH transmissions provided by an embodiment of the present disclosure.
Fig. 10 is a flowchart of another method for multiple PRACH transmissions provided by an embodiment of the present disclosure.
Fig. 11 is a flowchart of another method for multiple PRACH transmissions provided by an embodiment of the present disclosure.
Fig. 12 is a flowchart of another method for multiple PRACH transmissions provided by an embodiment of the present disclosure.
Fig. 13 is a flowchart of another method for multiple PRACH transmissions provided by an embodiment of the present disclosure.
Fig. 14 is a flowchart of another method for multiple PRACH transmissions provided by an embodiment of the present disclosure.
Fig. 15 is a block diagram of a communication device provided by an embodiment of the present disclosure.
Fig. 16 is a block diagram of a communication device provided by an embodiment of the present disclosure.
Fig. 17 is a block diagram of a chip provided by an embodiment of the present disclosure.

### DETAILED DESCRIPTION

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all implementations consistent with the present disclosure. Rather, they are merely examples of apparatuses and methods consistent with some aspects of the present disclosure as detailed in the appended claims.

The term used in the embodiments of the present disclosure is for the purpose of describing specific embodiments only, and is not intended to limit the embodiments of the present disclosure. The singular forms "a" and "the" used in the embodiments of the present disclosure and the appended claims are also intended to include the plural forms, unless the context clearly indicates other meaning. It should also be understood that the term "and/or" as used herein refers to and includes any or all possible combinations of one or more associated listed items.

It should be understood that although the terms "first", "second", "third", etc. may be used to describe various information in the embodiments of the present disclosure, these information should not be limited to these terms. These terms are only used to distinguish the same type of information from each other. For example, without departing from the scope of the embodiments of the present disclosure, the first information may also be called the second information, and similarly, the second information may also be called the first information. Depending on the context, the word "if" as used here may be interpreted as "when" or "while" or "in response to determining". For the purpose of simplicity and easy understanding, terms such as "greater than" or "less than", "higher than" or "lower than" are used herein to describe the magnitude relationship. However, for those skilled in the art, it may be understood that the term "greater than" may also encompass "greater than or equal to", and the term "less than" may also encompass "less than or equal to". Similarly, the term "higher than" may also encompass "higher than or equal to", and the term "lower than" may also encompass "lower than or equal to".

In order to facilitate understanding, the terminology involved in the present disclosure is first introduced.

When a terminal sends a preamble, it may, for example, perform a preamble time domain repetition, i.e., send multiple preambles on PRACH resources with continuous time domain numbers. One PRACH transmission means to transmit multiple preambles continuously as a whole, and multiple PRACH transmissions means to perform a plurality of PRACH transmissions.

In order to better understand a method for multiple PRACH transmissions according to embodiments of the present disclosure, a communication system to which the embodiments of the present disclosure are applicable will be described below.

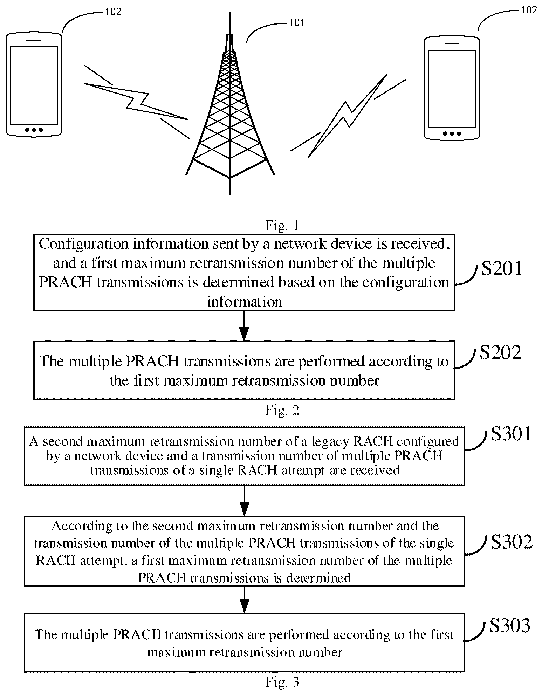

Fig. 1 which is a schematic architecture diagram of a communication system provided by an embodiment of the present disclosure. The communication system may include, but is not limited to, a network device and a terminal. The number and form of the devices shown in Fig. 1 are only for example and do not constitute a limitation to the embodiments of the present disclosure. In practical applications, two or more network devices and two or more terminals may be included. The communication system shown in Fig. 1 includes a network device 101 and a terminal 102 as an example.

It should be noted that the technical scheme of the embodiments of the present disclosure may be applied to various communication systems. For example, a 3th generation (3G) universal mobile telecommunications system (UMTS), a long term evolution (LTE) system, a 5th generation (5G) mobile communication system, a 5G new radio (NR) system, a 6th generation (6G) mobile communication system or other new mobile communication systems in the future.

The network device 101 in the embodiments of the present disclosure is an entity on a network side for transmitting or receiving signals. For example, the network device 101 may be an evolved NodeB (eNB), a transmission reception point (TRP), a next generation NodeB (gNB) in the NR system, a base station in other future mobile communication systems or an access node in a wireless fidelity (WiFi) system. The embodiments of the present disclosure do not limit the specific technology and the specific equipment form adopted by the network device. The network device provided by the embodiments of the present disclosure may be composed of a central unit (CU) and distributed units (DUs), in which the CU may also be called a control unit. With the CU-DU structure, protocol layers of the network device, such as the base station, may be separated, and functions of part of the protocol layers are centralized controlled by the CU, while functions of part or all of the remaining protocol layers are distributed in the DUs, and the DUs are centrally controlled by the CU.

The terminal 102 in the embodiments of the present disclosure is an entity on a user side for receiving or transmitting signals, such as a mobile phone. The terminal may also be called a terminal device, user equipment (UE), a mobile station (MS), a mobile terminal (MT) and so on. The terminal may be a vehicle with a communication function, a smart vehicle, a mobile phone, a wearable device, a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. The embodiments of the present disclosure do not limit the specific technology and the specific equipment form adopted by the terminal.

It may be understood that the communication system described in the embodiments of the present disclosure is for more clearly explaining the technical scheme of the embodiments of the present disclosure, and does not constitute a limitation on the technical scheme provided by the embodiments of the present disclosure. It may be understood by those ordinary skilled in the related art, with the evolution of the system architecture and the emergence of new business scenarios, the technical scheme provided by the embodiments of the present disclosure is also applicable to similar technical problems.

It should be noted that the method for multiple PRACH transmissions provided by any embodiment in the present disclosure may be performed alone, or combined with possible implementation methods in other embodiments, or combined with any technical scheme in the related art.

In the related art, a maximum retransmission number of multiple PRACH transmissions may be configured to be the same as a maximum retransmission number (*preambleTransMax*) of a legacy RACH. However, when the *preambleTransMax* of the legacy RACH has a large value, even if a RACH attempt reaches the maximum number, the access may still be unsuccessful for the terminal with multiple PRACH transmissions enabled and poor channel conditions, which will cause long-term interference and waste of PRACH resources. In addition, the energy consumption of the terminal will be increased.

The method and apparatus for multiple PRACH transmissions provided by the present disclosure will be introduced in detail with reference to the accompanying drawings.

Fig. 2 is a flowchart of a method for multiple PRACH transmissions provided by an embodiment of the present disclosure. The method for multiple PRACH transmissions may be performed by a terminal. As shown in Fig. 2, the method may include, but is not limited to, the following steps.

In step S201, configuration information sent by a network device is received, and a first maximum retransmission number of the multiple PRACH transmissions is determined based on the configuration information.

On the basis of reducing the interference and waste of PRACH resources, in this embodiment of the present disclosure, in order to improve the success probability of random access of the terminal, a separate first maximum retransmission number may be determined for the multiple PRACH transmissions, that is, the multiple PRACH transmissions may have a dedicated first maximum retransmission number.

Optionally, the first maximum retransmission number may be different from a second maximum retransmission number of the legacy RACH, for example, the first maximum retransmission number may be less than the second maximum retransmission number of the legacy RACH. Optionally, the first maximum retransmission number may be the same as the second maximum retransmission number of the legacy RACH.

In some implementations, the terminal may receive the configuration information sent by the network device through a radio resource control (RRC).

In other implementations, the terminal may receive information of the multiple PRACH transmissions sent by the network device through a system information block 1 (SIB1).

In some implementations, the configuration information sent by the network device may include at least one of the following parameters:
the first maximum retransmission number of the multiple PRACH transmissions;
the second maximum retransmission number of the legacy RACH;
a transmission number of multiple PRACH transmissions of a single RACH attempt;
a set value;
an offset value of the second maximum retransmission number; and
a set coefficient corresponding to the second maximum retransmission number.

In some implementations, the terminal may determine the first maximum retransmission number of the multiple PRACH transmissions based on a network configuration. In this implementation, the network device may directly configure the first maximum retransmission number of the multiple PRACH transmissions to the terminal.

In other implementations, the terminal may determine the first maximum retransmission number of the multiple PRACH transmissions based on a protocol agreement. In this implementation, the terminal may receive the relevant configuration information sent by the network device, and determine the first maximum retransmission number of the multiple PRACH transmissions based on the relevant configuration information sent by the network device and the protocol agreement. The relevant configuration information may include one or more of the second maximum retransmission number of the legacy RACH, the transmission number of the multiple PRACH transmissions of the single RACH attempt, the set value, the offset value of the second maximum retransmission number, and the set coefficient corresponding to the second maximum retransmission number.

In still other implementations, in a case that the network device does not directly configure the first maximum retransmission number, the terminal may determine the first maximum retransmission number of the multiple PRACH transmissions based on relevant configuration information and a protocol agreement.

In step S202, the multiple PRACH transmissions are performed according to the first maximum retransmission number.

After determining the first maximum retransmission number of the multiple PRACH transmissions, the terminal may initiate a RACH attempt to the network device according to the first maximum retransmission number, so as to successfully complete the random access within the first maximum retransmission number.

The terminal may initiate the RACH attempt, and in each RACH attempt, one or more PRACH transmissions may be made to the network device for random access. At the end of a contention resolution window, the terminal may receive retransmission downlink control information (DCI) of message 4 (msg4) and message 3 (msg3), or the received msg4 is consistent with the content sent by msg3, then it may be determined that the terminal has successfully accessed.

In a case that, at the end of a random access response (RAR) window, the terminal does not receive an uplink (UL) grant dedicated to itself, or at the end of the contention resolution window, the terminal does not receive the retransmission DCI of msg4 or msg3, or although the terminal has received msg4, the contention resolution fails, for example, the first 48 bits of msg4 are inconsistent with the content sent by msg3, it may be determined that the terminal has failed to access. The terminal may initiate the RACH attempt or PRACH transmission again until the access is successful, or the access still fails even after reaching the first maximum retransmission number.

In this embodiment of the present disclosure, the dedicated first maximum retransmission number may be determined separately for the multiple PRACH transmissions, and the resource conflict of the PRACH may be reduced through the separate first maximum retransmission number, thereby improving the probability of the access success of the RACH attempt.

Fig. 3 is a flowchart of a method for multiple PRACH transmissions provided by an embodiment of the present disclosure. The method for multiple PRACH transmissions may be performed by the terminal. As shown in Fig. 3, the method may include, but is not limited to, the following steps.

In step S301, a second maximum retransmission number of a legacy RACH configured by a network device and a transmission number of multiple PRACH transmissions of a single RACH attempt are received.

Optionally, the terminal may receive the second maximum retransmission number of the legacy RACH configured by the network device and the transmission number of the multiple PRACH transmissions of the single RACH attempt through a RRC or an SIB1.

In step S302, according to the second maximum retransmission number and the transmission number of the multiple PRACH transmissions of the single RACH attempt, a first maximum retransmission number of the multiple PRACH transmissions is determined.

In some implementations, a first ratio between the second maximum retransmission number of the legacy RACH and the transmission number of the multiple PRACH transmissions of the single RACH attempt is acquired, and the first maximum retransmission number is determined according to the first ratio. Optionally, the first ratio may be directly determined as the first maximum retransmission number of the multiple PRACH transmissions.

In other implementations, a set value configured by the network device is received; alternatively, a set value is determined based on a protocol agreement. A second ratio between the transmission number of the multiple PRACH transmissions of the single RACH attempt and the set value is acquired. For example, the set value may be denoted as N, and N may be 2. Further, a third ratio between the second maximum retransmission number of the legacy RACH and the second ratio is acquired, and the third ratio is determined as the first maximum retransmission number.

As a possible implementation, the multiple PRACH transmissions of the single RACH attempt may correspond to one or more candidate transmission numbers. In this embodiment of the present disclosure, the terminal may receive the candidate transmission number of the multiple PRACH transmissions of the single RACH attempt configured by the network device. One candidate transmission number may be provided, or a subset of numbers may be provided, and the subset of numbers may include two or more candidate transmission numbers. The terminal may determine the corresponding first maximum retransmission number of the multiple PRACH transmissions for each candidate transmission number of the multiple PRACH transmissions of the single RACH attempt. That is, for each candidate transmission number, the terminal may determine the first maximum retransmission number of the multiple PRACH transmissions corresponding to the candidate transmission number based on the second maximum retransmission number and the candidate transmission number in the above manner. Optionally, different candidate transmission numbers of the multiple PRACH transmissions of the single RACH attempt may correspond to different set values or set coefficients. Correspondingly, different candidate transmission numbers correspond to different first maximum retransmission numbers. Accordingly, the terminal may receive the candidate transmission number of the multiple PRACH transmissions of the single RACH attempt and the first maximum retransmission number corresponding to the candidate transmission number configured by the network device. The first maximum retransmission numbers corresponding to different candidate transmission numbers may be different.

In order to reduce the resource conflict of the PRACH, the value of the first maximum retransmission number (*preambleTransMax*) of the multiple PRACH transmissions is reduced in this embodiment of the present disclosure, which decreases the access probability of the terminal, and thus may lead to the failure of RACH access. In order to improve the probability of the access success of RACH, the network device may configure a reasonable transmission resource amount for multiple PRACH transmissions, and may determine the corresponding transmission resource amount for each candidate transmission number of the multiple PRACH transmissions of the single RACH attempt. For example, the network device may determine the corresponding number of preambles for each candidate transmission number of the multiple PRACH transmissions of the single RACH attempt. Accordingly, the terminal may receive the candidate transmission number of the multiple PRACH transmissions of the single RACH attempt and the transmission resource amount corresponding to the candidate transmission number configured by the network device. The amounts of transmission resources corresponding to different candidate transmission numbers may be different.

In step S303, the multiple PRACH transmissions are performed according to the first maximum retransmission number.

In this embodiment of the present disclosure, the implementation of step S303 may be realized in any way of the embodiments of the present disclosure, which is not limited here, and will not be repeated.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the access success of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

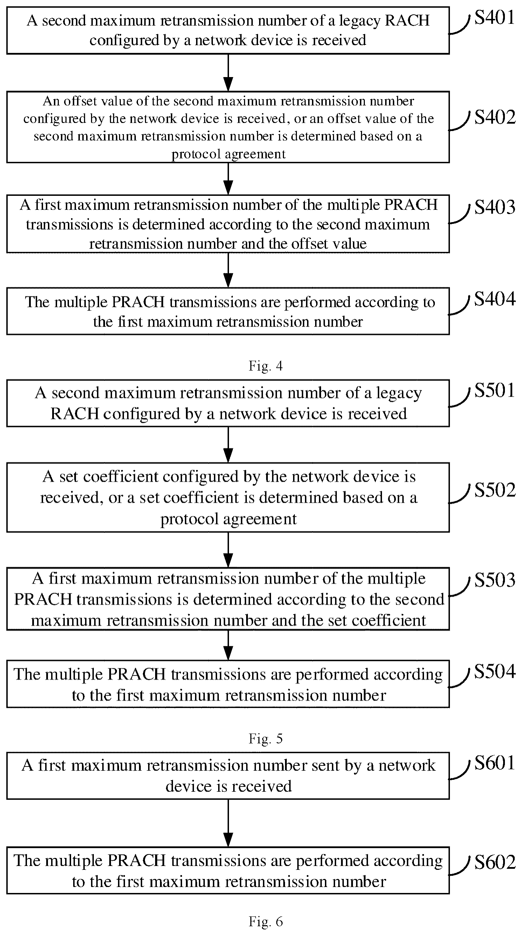

Fig. 4 is a flowchart of a method for multiple PRACH transmissions provided by an embodiment of the present disclosure. The method for multiple PRACH transmissions may be performed by a terminal. As shown in Fig. 4, the method may include, but is not limited to, the following steps.

In step S401, a second maximum retransmission number of a legacy RACH configured by a network device is received.

Optionally, the terminal may receive the second maximum retransmission number of the legacy RACH configured by the network device through a RRC or an SIB1.

In step S402, an offset value of the second maximum retransmission number configured by the network device is received, or an offset value of the second maximum retransmission number is determined based on a protocol agreement.

Optionally, the terminal may receive the offset value of the second maximum retransmission number configured by the network device through the RRC or the SIB1.

Optionally, in a case that the network device does not configure a set coefficient, the offset value of the second maximum retransmission number may be determined based on the protocol agreement.

Optionally, the terminal may directly determine the offset value of the second maximum retransmission number based on the protocol agreement.

In step S403, a first maximum retransmission number of the multiple PRACH transmissions is determined according to the second maximum retransmission number and the offset value.

Optionally, the network device may determine a difference between the second maximum retransmission number of the legacy RACH and the offset value, and determine the difference between the second maximum retransmission number and the offset value as the first maximum retransmission number of the multiple PRACH transmissions.

In some implementations, the terminal may receive a candidate transmission number of multiple PRACH transmissions of a single RACH attempt configured by the network device. One candidate transmission number may be provided, or a subset of numbers may be provided, and the subset of numbers may include two or more candidate transmission numbers. In a case that there are multiple candidate transmission numbers of the multiple PRACH transmissions of the single RACH attempt, each candidate transmission number may be configured with a corresponding offset value. For each candidate transmission number, the terminal may determine the first maximum retransmission number of the multiple PRACH transmissions corresponding to the candidate transmission number based on the second maximum retransmission number and the offset value corresponding to the candidate transmission number. Optionally, the offset values corresponding to different candidate transmission numbers of the multiple PRACH transmissions of the single RACH attempt may be different, so that different candidate transmission numbers correspond to different first maximum retransmission numbers.

In other implementations, the terminal may receive a candidate transmission number of multiple PRACH transmissions of a single RACH attempt and a transmission resource amount corresponding to the candidate transmission number configured by the network device. The amounts of transmission resources corresponding to different candidate transmission numbers may be different.

In step S404, the multiple PRACH transmissions are performed according to the first maximum retransmission number.

In this embodiment of the present disclosure, the implementation of step S404 may be realized in any way of the embodiments of the present disclosure, which is not limited here, and will not be repeated.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

Fig. 5 is a flowchart of a method for multiple PRACH transmissions provided by an embodiment of the present disclosure. The method for multiple PRACH transmissions may be performed by a terminal. As shown in Fig. 5, the method may include, but is not limited to, the following steps.

In step S501, a second maximum retransmission number of a legacy RACH configured by a network device is received.

Optionally, the terminal may receive the second maximum retransmission number of the legacy RACH configured by the network device through a RRC or an SIB1.

In step S502, a set coefficient configured by the network device is received, or a set coefficient is determined based on a protocol agreement.

Optionally, the terminal may receive the set coefficient configured by the network device through a RRC or an SIB1.

Optionally, in a case that the network device does not configure the set coefficient, the set coefficient may be determined based on the protocol agreement. Optionally, the set coefficient may be a value greater than 0 and less than or equal to 1.

Optionally, the terminal may directly determine the set coefficient based on the protocol agreement.

In step S503, a first maximum retransmission number of the multiple PRACH transmissions is determined according to the second maximum retransmission number and the set coefficient.

Optionally, a product of the second maximum retransmission number and the set coefficient is determined, and the product is determined as the first maximum retransmission number of the multiple PRACH transmissions.

In some implementations, the terminal may receive a candidate transmission number of multiple PRACH transmissions of a single RACH attempt configured by the network device. One candidate transmission number may be provided, or a subset of numbers may be provided, and the subset of numbers may include two or more candidate transmission numbers. In a case that there are multiple candidate transmission numbers of the multiple PRACH transmissions of the single RACH attempt, each candidate transmission number may be configured with a corresponding set coefficient. For each candidate transmission number, the terminal may determine the first maximum retransmission number of the multiple PRACH transmissions corresponding to the candidate transmission number based on the second maximum retransmission number and the set coefficient corresponding to the candidate transmission number. Optionally, the set coefficients corresponding to different candidate transmission numbers of the multiple PRACH transmissions with the single RACH attempts may be different, so that different candidate transmission numbers correspond to different first maximum retransmission numbers.

In other implementations, the terminal may receive a candidate transmission number of multiple PRACH transmissions of a single RACH attempt and a transmission resource amount corresponding to the candidate transmission number configured by the network device. The amounts of transmission resources corresponding to different candidate transmission numbers may be different.

In step S504, the multiple PRACH transmissions are performed according to the first maximum retransmission number.

In this embodiment of the present disclosure, the implementation of step S504 may be realized in any way of the embodiments of the present disclosure, which is not limited here, and will not be repeated.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

Fig. 6 is a flowchart of a method for multiple PRACH transmissions provided by an embodiment of the present disclosure. The method for multiple PRACH transmissions may be performed by a terminal. As shown in Fig. 6, the method may include, but is not limited to, the following steps.

In step S601, a first maximum retransmission number sent by a network device is received.

Optionally, the terminal may receive the first maximum retransmission number sent by the network device through a RRC or an SIB1. Optionally, the network device may determine the first maximum retransmission number of the multiple PRACH transmissions based on a second maximum retransmission number of a legacy RACH and a transmission number of multiple PRACH transmissions of a single RACH attempt. Determination of the first maximum retransmission number of the multiple PRACH transmissions may be realized in any way of the embodiments of the present disclosure, which is not limited here, and will not be repeated.

Optionally, in a case that there are multiple candidate transmission numbers of multiple PRACH transmissions of a single RACH attempt are multiple, the terminal may receive the candidate transmission numbers of the multiple PRACH transmissions of the single RACH attempt and the first maximum retransmission number corresponding to each candidate transmission number configured by the network device. It may be understood that different candidate transmission numbers of the multiple PRACH transmissions of the single RACH attempt correspond to different first maximum retransmission numbers.

Optionally, in a case that there are multiple candidate transmission numbers of multiple PRACH transmissions of a single RACH attempt, the terminal may receive the candidate transmission numbers of the multiple PRACH transmissions of the single RACH attempt and a transmission resource amount corresponding to each candidate transmission number configured by the network device. Different candidate transmission numbers correspond to different amounts of transmission resources.

In step S602, the multiple PRACH transmissions are performed according to the first maximum retransmission number.

In this embodiment of the present disclosure, the implementation of step S602 may be realized in any way of the embodiments of the present disclosure, which is not limited here and will not be repeated.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

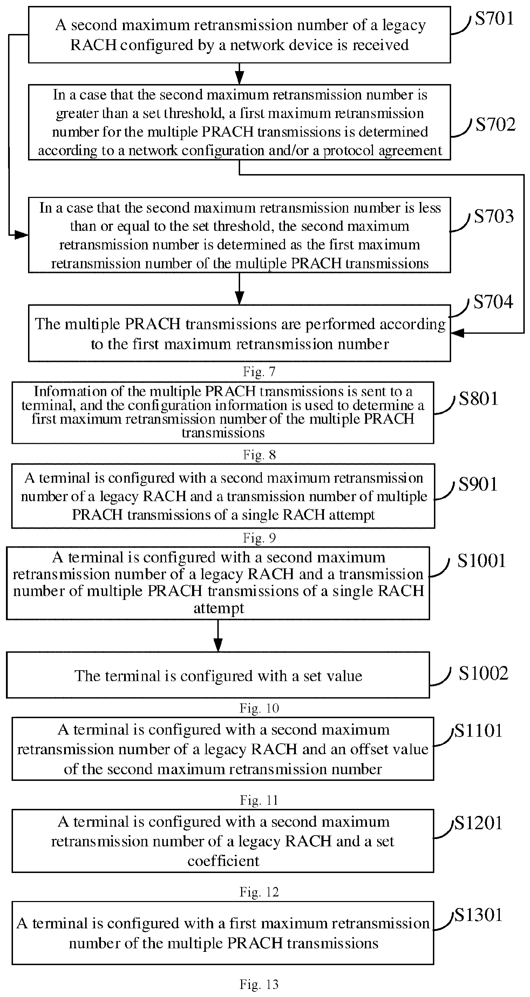

Fig. 7 is a flowchart of a method for multiple PRACH transmissions provided by an embodiment of the present disclosure. The method for multiple PRACH transmissions may be performed by a terminal. As shown in Fig. 7, the method may include, but is not limited to, the following steps.

In step S701, a second maximum retransmission number of a legacy RACH configured by a network device is received.

Optionally, the terminal may receive the second maximum retransmission number of the legacy RACH configured by the network device through a RRC or an SIB1.

In step S702, in a case that the second maximum retransmission number is greater than a set threshold, a first maximum retransmission number for the multiple PRACH transmissions is determined according to a network configuration and/or a protocol agreement.

After determining the second maximum retransmission number of the legacy RACH, the second maximum retransmission number may be compared with the set threshold, and when the second maximum retransmission number is greater than the set threshold, the first maximum retransmission number of the multiple PRACH transmissions may be determined based on the network configuration and/or the protocol agreement. Determination of the first maximum retransmission number of the multiple PRACH transmissions may be realized in any way of the embodiments of the present disclosure, which is not limited here, and will not be repeated.

In step S703, in a case that the second maximum retransmission number is less than or equal to the set threshold, the second maximum retransmission number is determined as the first maximum retransmission number of the multiple PRACH transmissions.

In step S704, the multiple PRACH transmissions are performed according to the first maximum retransmission number.

In this embodiment of the present disclosure, the implementation of step S704 may be realized in any way of the embodiments of the present disclosure, which is not limited here, and will not be repeated.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

Fig. 8 is a flowchart of a method for multiple PRACH transmissions provided by an embodiment of the present disclosure. The method for multiple PRACH transmissions may be performed by a network device. As shown in Fig. 8, the method may include, but is not limited to, the following steps.

In step S801, information of the multiple PRACH transmissions is sent to a terminal, and the configuration information is used to determine a first maximum retransmission number of the multiple PRACH transmissions.

On the basis of reducing the interference and waste of PRACH resources, in this embodiment of the present disclosure, in order to improve the success probability of random access of the terminal, a separate first maximum retransmission number may be determined for the multiple PRACH transmissions, that is, the multiple PRACH transmissions may have a dedicated first maximum retransmission number.

Optionally, the first maximum retransmission number may be different from a second maximum retransmission number of a legacy RACH, for example, the first maximum retransmission number may be less than the second maximum retransmission number of the legacy RACH. Optionally, the first maximum retransmission number may be the same as the second maximum retransmission number of the legacy RACH.

In some implementations, the configuration information sent by the network device may include at least one of the following parameters:
the first maximum retransmission number of the multiple PRACH transmissions;
the second maximum retransmission number of the legacy RACH;
a transmission number of multiple PRACH transmissions of a single RACH attempt;
a set value;
an offset value of the second maximum retransmission number; and
a set coefficient corresponding to the second maximum retransmission number.

In some implementations, the network device may directly configure the first maximum retransmission number of the multiple PRACH transmissions to the terminal.

In other implementations, the network device may send relevant configuration information of the multiple PRACH transmissions to the terminal, and the terminal determines the first maximum retransmission number of the multiple PRACH transmissions according to the relevant configuration information and a protocol agreement. The relevant configuration information may include one or more of the second maximum retransmission number of the legacy RACH, the transmission number of the multiple PRACH transmissions of the single RACH attempt, the set value, the offset value of the second maximum retransmission number, and the set coefficient corresponding to the second maximum retransmission number.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

Fig. 9 is a flowchart of a method for multiple PRACH transmissions provided by an embodiment of the present disclosure. The method for multiple PRACH transmissions may be performed by a network device. As shown in Fig. 9, the method may include, but is not limited to, the following steps.

In step S901, a terminal is configured with a second maximum retransmission number of a legacy RACH and a transmission number of multiple PRACH transmissions of a single RACH attempt.

The network device may send the second maximum retransmission number of the legacy RACH and the transmission number of the multiple PRACH transmissions of the single RACH attempt to the terminal through a RRC or an SIB1. The terminal may determine the first maximum retransmission number of the multiple PRACH transmissions based on the second maximum retransmission number and the transmission number of the multiple PRACH transmissions of the single RACH attempt. It may be understood that this specific implementation may be realized in any way of the embodiments of the present disclosure, which is not limited here, and will not be repeated.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

Fig. 10 is a flowchart of a method for multiple PRACH transmissions provided by an embodiment of the present disclosure. The method for multiple PRACH transmissions may be performed by a network device. As shown in Fig. 10, the method may include, but is not limited to, the following steps.

In step S1001, a terminal is configured with a second maximum retransmission number of a legacy RACH and a transmission number of multiple PRACH transmissions of a single RACH attempt.

In step S1002, the terminal is configured with a set value.

In some implementations, the network device may send the second maximum retransmission number of the legacy RACH, the transmission number of the multiple RACH transmissions of the single RACH attempt, and the set value to the terminal through a RRC or an SIB1. The terminal may determine the first maximum retransmission number of the multiple PRACH transmissions based on the second maximum retransmission number, the transmission number of the multiple PRACH transmissions of the single RACH attempt, and the set value. It may be understood that this specific implementation may be realized in any way of the embodiments of the present disclosure, which is not limited here, and will not be repeated.

In other implementations, in a case that there are multiple candidate transmission numbers of the multiple PRACH transmissions of the single RACH attempt, the network device may configure a corresponding set value for each candidate transmission number.

In other implementations, in a case that that there are multiple candidate transmission numbers of the multiple PRACH transmissions of the single RACH attempt, the network device may configure the terminal with the candidate transmission numbers of the multiple PRACH transmissions corresponding to the single RACH attempt and a transmission resource amount corresponding to each candidate transmission number. Different candidate transmission numbers correspond to different amounts of transmission resources.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

Fig. 11 which is a flowchart of a method for multiple PRACH transmissions provided by an embodiment of the present disclosure. The method for multiple PRACH transmissions may be performed by a network device. As shown in Fig. 11, the method may include, but is not limited to, the following steps.

In step S1101, a terminal is configured with a second maximum retransmission number of a legacy RACH and an offset value of the second maximum retransmission number.

In some implementations, the network device may send the second maximum retransmission number of the legacy RACH and the offset value of the second maximum retransmission number to the terminal through a RRC or an SIB1. The terminal may determine a first maximum retransmission number of the multiple PRACH transmissions based on the second maximum retransmission number and the offset value. It may be understood that this specific implementation may be realized in any way of the embodiments of the present disclosure, which is not limited here, and will not be repeated.

In other implementations, in a case that there are multiple candidate transmission numbers of the multiple PRACH transmissions of the single RACH attempt, the network device may configure a corresponding offset value for each candidate transmission number.

In other implementations, in a case that that there are multiple candidate transmission numbers of the multiple PRACH transmissions of the single RACH attempt, the network device may configure the terminal with the candidate transmission numbers of the multiple PRACH transmissions corresponding to the single RACH attempt and a transmission resource amount corresponding to each candidate transmission number. Different candidate transmission numbers correspond to different amounts of transmission resources.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

Fig. 12 is a flowchart of a method for multiple PRACH transmissions provided by an embodiment of the present disclosure. The method for multiple PRACH transmissions may be performed by a network device. As shown in Fig. 12, the method may include, but is not limited to, the following steps.

In step S1201, a terminal is configured with a second maximum retransmission number of a legacy RACH and a set coefficient.

In some implementations, the network device may send the second maximum retransmission number of the legacy RACH and the set coefficient to the terminal through a RRC or an SIB1. The terminal may determine a first maximum retransmission number of the multiple PRACH transmissions based on the second maximum retransmission number and the offset value. It may be understood that this specific implementation may be realized in any way of the embodiments of the present disclosure, which is not limited here, and will not be repeated.

In other implementations, in a case that there are multiple candidate transmission numbers of the multiple PRACH transmissions of the single RACH attempt, the network device may configure a corresponding set coefficient for each candidate transmission number.

In other implementations, in a case that there are multiple candidate transmission numbers of the multiple PRACH transmissions of the single RACH attempt, the network device may configure the terminal with the candidate transmission numbers of the multiple PRACH transmissions corresponding to the single RACH attempt and a transmission resource amount corresponding to each candidate transmission number. Different candidate transmission numbers correspond to different amounts of transmission resources.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

Fig. 13 is a flowchart of a method for multiple PRACH transmissions provided by an embodiment of the present disclosure. The method for multiple PRACH transmissions may be performed by a network device. As shown in Fig. 13, the method may include, but is not limited to, the following steps.

In step S1301, a terminal is configured with a first maximum retransmission number of the multiple PRACH transmissions.

In some implementations, the network device may send the first maximum retransmission number of the multiple PRACH transmissions and a set coefficient to the terminal through a RRC or an SIB1.

In other implementations, in a case that there are multiple candidate transmission numbers of multiple PRACH transmissions of a single RACH attempt, the network device may configure the terminal with the candidate transmission numbers of the multiple PRACH transmissions corresponding to the single RACH attempt and the first maximum retransmission number corresponding to each candidate transmission number. Different candidate transmission numbers correspond to different first maximum retransmission numbers.

In other implementations, in a case that there multiple candidate transmission numbers of multiple PRACH transmissions of a single RACH attempt, the network device may configure the terminal with the candidate transmission numbers of the multiple PRACH transmissions corresponding to the single RACH attempt and a transmission resource amount corresponding to each candidate transmission number. Different candidate transmission numbers correspond to different amounts of transmission resources.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

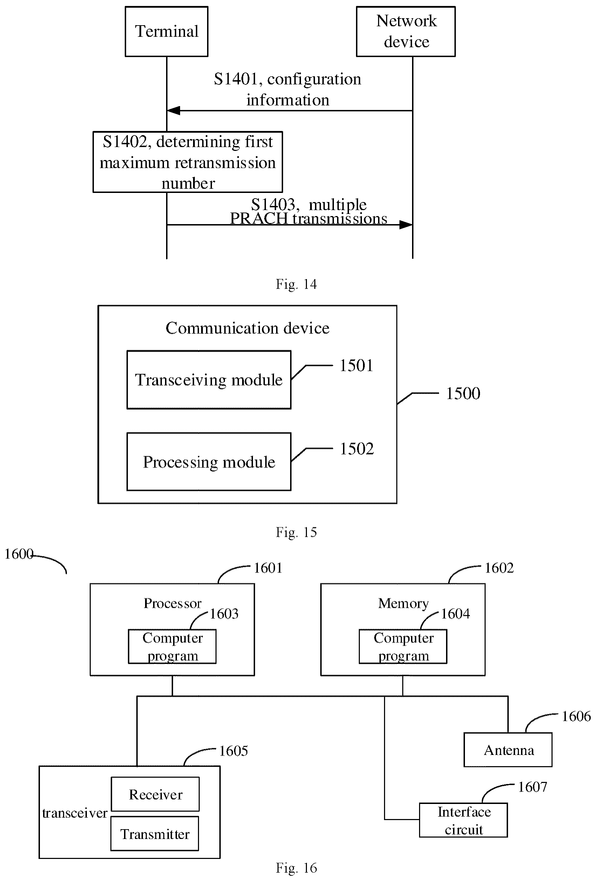

Fig. 14 is a flowchart of a method for multiple PRACH transmissions provided by an embodiment of the present disclosure. The method for multiple PRACH transmissions may be performed by a communication system. As shown in Fig. 14, the method may include, but is not limited to, the following steps.

In step S1401, a network device sends configuration information of the multiple PRACH transmissions to a terminal.

The configuration information is used to determine a first maximum retransmission number of the multiple PRACH transmissions.

In this embodiment of the present disclosure, the implementation of step S1401 may be realized in any way of the embodiments of the present disclosure, which is not limited here, and will not be repeated.

In step S1402, based on the configuration information, the terminal determines the first maximum retransmission number of the multiple PRACH transmissions.

In this embodiment of the present disclosure, the implementation of step S1402 may be realized in any way of the embodiments of the present disclosure, which is not limited here, and will not be repeated.

In step S1403, the multiple PRACH transmissions are performed according to the first maximum retransmission number.

In this embodiment of the present disclosure, the implementation of step S1403 may be realized in any way of the embodiments of the present disclosure, which is not limited here, and will not be repeated.

In the above embodiments provided by the present disclosure, the methods provided by the embodiments of the present disclosure are introduced from the perspectives of the network device and the terminal respectively. In order to realize the functions in the methods provided by the embodiments of the present disclosure, the network device and the terminal may include hardware structures and software modules, and the above functions are realized in the form of hardware structures, software modules, or hardware structures plus software modules. One of the above functions may be implemented in the form of hardware structures, software modules, or hardware structures plus software modules.

Fig. 15 is a block diagram of a communication device 1500 provided by an embodiment of the present disclosure. The communication device 1500 shown in Fig. 15 may include a transceiving module 1501 and a processing module 1502. The transceiving module 1501 may include a transmitting module and/or a receiving module. The transmitting module is used to realize a transmitting function and the receiving module is used to realize a receiving function, so that the transceiving module 1501 may realize the transmitting function and/or the receiving function.

The communication device 1500 may be a network device, an apparatus in a network device, or an apparatus that may be used in matching with a network device. Alternatively, the communication device 1500 may be a terminal, an apparatus in a terminal, or an apparatus that may be used in matching with a terminal.

The communication device 1500 is a terminal, and includes:
a transceiving module 1501 configured to: receive configuration information configured by a network device, and determine a first maximum retransmission number of multiple PRACH transmissions based on the configuration information; and perform the multiple PRACH transmissions according to the first maximum retransmission number.

In some implementations, the processing module 1502 is configured to determine the first maximum retransmission number in one of the following ways: the first maximum retransmission number is configured by the network device; or
the first maximum retransmission number is determined based on a protocol agreement; or
in a case that the first maximum retransmission number is not configured by the network device, the first maximum retransmission number is determined based on a protocol agreement.

In some implementations, the transceiving module 1501 is further configured to receive a second maximum retransmission number of a legacy random access channel (RACH) and a transmission number of multiple PRACH transmissions of a single RACH attempt configured by the network device.

In some implementations, the processing module 1502 is further configured to determine the first maximum retransmission number according to the second maximum retransmission number and the transmission number of the multiple PRACH transmissions of the single RACH attempt.

In some implementations, the processing module 1502 is further configured to: acquire a first ratio between the second maximum retransmission number and the transmission number of the multiple PRACH transmissions of the single RACH attempt; and determine the first maximum retransmission number according to the first ratio.

In some implementations, the transceiving module 1501 is further configured to receive a set value configured by the network device.

In some implementations, the processing module 1502 is further configured to determine a set value based on a protocol agreement.

In some implementations, the processing module 1502 is further configured to: acquire a second ratio between the transmission number of the multiple PRACH transmissions of the single RACH attempt and the set value; acquire a third ratio between the second maximum retransmission number and the second ratio; and determine the third ratio as the first maximum retransmission number.

In some implementations, the transceiving module 1501 is further configured to receive a second maximum retransmission number of a legacy RACH and an offset value configured by the network device.

In some implementations, the processing module 1502 is further configured to determine the first maximum retransmission number according to the second maximum retransmission number and the offset value.

In some implementations, the transceiving module 1501 is further configured to receive a second maximum retransmission number of a legacy RACH configured by the network device.

In some implementations, the processing module 1502 is further configured to determine an offset value of the second maximum retransmission number based on a protocol.

In some implementations, the processing module 1502 is further configured to determine the first maximum retransmission number according to the second maximum retransmission number and the offset value.

In some implementations, the processing module 1502 is further configured to: determine a difference between the second maximum retransmission number and the offset value; and determine the difference as the first maximum retransmission number.

In some implementations, the transceiving module 1501 is further configured to receive a second maximum retransmission number of a legacy RACH and a set coefficient configured by the network device.

In some implementations, the processing module 1502 is further configured to determine the first maximum retransmission number according to the second maximum retransmission number and the set coefficient.

In some implementations, the transceiving module 1501 is further configured to receive a second maximum retransmission number of a legacy RACH configured by the network device.

In some implementations, the processing module 1502 is further configured to determine a set coefficient based on a protocol agreement.

In some implementations, the processing module 1502 is further configured to determine the first maximum retransmission number according to the second maximum retransmission number and the set coefficient.

In some implementations, the processing module 1502 is further configured to: determine a product of the second maximum retransmission number and the set coefficient; and determine the product as the first maximum retransmission number.

In some implementations, the transceiving module 1501 is further configured to receive the first maximum retransmission number sent by the network device.

In some implementations, the transceiving module 1501 is further configured to receive the configuration information sent by the network device through a radio resource control (RRC) or a system information block 1 (SIB1).

In some implementations, the transceiving module 1501 is further configured to receive a candidate transmission number of multiple PRACH transmissions of a single RACH attempt and the first maximum retransmission number corresponding to the candidate transmission number configured by the network device. Different candidate transmission numbers correspond to different first maximum retransmission numbers.

In some implementations, the transceiving module 1501 is further configured to receive a candidate transmission number of multiple PRACH transmissions of a single RACH attempt and a transmission resource amount corresponding to the candidate transmission number configured by the network device. Different candidate transmission numbers correspond to different transmission resource amounts.

In some implementations, before determining the first maximum retransmission number of the multiple PRACH transmissions, the processing module 1502 is further configured to: in a case that a second maximum retransmission number of a legacy RACH is greater than a set threshold, determine the first maximum retransmission number according to a network configuration and/or a protocol agreement; or in a case that a second maximum retransmission number of a legacy RACH is less than or equal to a set threshold, determine the second maximum retransmission number as the first maximum retransmission number.

The communication device 1500 is a network device, and includes:
a transceiving module 1501 configured to send configuration information of multiple PRACH transmissions to a terminal, where the configuration information is used to determine a first maximum retransmission number of the multiple PRACH transmissions.

In some implementations, the transceiving module 1501 is further configured to configure the terminal with a second maximum retransmission number of a legacy RACH and a transmission number of multiple PRACH transmissions of a single RACH attempt.

In some implementations, the transceiving module 1501 is further configured to configure the terminal with a set value.

In some implementations, the transceiving module 1501 is further configured to configure the terminal with a second maximum retransmission number of a legacy RACH and an offset value.

In some implementations, the transceiving module 1501 is further configured to the terminal with a second maximum retransmission number of a legacy RACH and a set coefficient.

In some implementations, the transceiving module 1501 is further configured to configure the terminal with the first maximum retransmission number.

In some implementations, the transceiving module 1501 is further configured to configure the terminal with a candidate transmission number of multiple PRACH transmissions corresponding to a single RACH attempt and the first maximum retransmission number corresponding to the candidate transmission number. Different candidate transmission numbers correspond to different first maximum retransmission numbers.

In some implementations, the transceiving module 1501 is further configured to configure the terminal with a candidate transmission number of multiple PRACH transmissions corresponding to a single RACH attempt and a transmission resource amount corresponding to the candidate transmission number. Different candidate transmission numbers correspond to different transmission resource amounts.

In some implementations, the transceiving module 1501 is further configured to send the configuration information to the terminal through a RRC or an SIB1.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

Fig. 16 is a block diagram of another communication device 1600 provided by an embodiment of the present disclosure. The communication device 1600 may be a network device, or may be a terminal, or may be a chip, a chip system, or a processor that supports the network device to realize the above method, or may be a chip, a chip system, or a processor that supports the terminal to realize the above method. The device may be used to realize the methods described in the above method embodiments, and for details, reference may be made to the descriptions in the above method embodiments.

The communication device 1600 may include one or more processors 1601. The processor 1601 may be a general-purpose processor or a special-purpose processor or the like, for example, a baseband processor or a central processor. The baseband processor may be used to process communication protocols and communication data, and the central processor may be used to control communication devices (such as base stations, baseband chips, terminals, terminal chips, DUs or CUs, etc.), execute computer programs, and process data of computer programs.

Optionally, the communication device 1600 may further include one or more memories 1602, on which a computer program 1604 may be stored, and the processor 1601 executes the computer program 1604, so that the communication device 1600 may perform the methods described in the above method embodiments. Optionally, data may also be stored in the memory 1602. The communication device 1600 and the memory 1602 may be arranged separately or integrated together.

Optionally, the communication device 1600 may further include a transceiver 1605 and an antenna 1606. The transceiver 1605 may be called a transceiving unit, a transceiver, a transceiving circuit, etc., and is used to realize a transceiving function. The transceiver 1605 may include a receiver and a transmitter, the receiver may be called a receiving machine or a receiving circuit, etc., for realizing a receiving function, and the transmitter may be called a transmitting machine or a transmitting circuit, etc., for realizing a transmitting function.

Optionally, the communication device 1600 may further include one or more interface circuits 1607. The interface circuit 1607 is used to receive code instructions and transmit them to the processor 1601. The processor 1601 executes the code instructions to cause the communication device 1600 to perform the methods described in the above method embodiments.

In an implementation, the processor 1601 may include a transceiver for receiving and transmitting functions. For example, the transceiver may be a transceiving circuit, or an interface, or an interface circuit. The transceiving circuits, interfaces or interface circuits for receiving and transmitting functions may be separated or integrated. The transceiving circuit, interface or interface circuit may be used for reading and writing codes/data, or the transceiving circuit, interface or interface circuit may be used for signal transmission or transfer.

In an implementation, the processor 1601 may store a computer program 1603, and the computer program 1603 runs on the processor 1601, which may make the communication device 1600 perform the methods described in the above method embodiments. The computer program 1603 may be embedded in the processor 1601, in which case, the processor 1601 may be implemented by hardware.

In an implementation, the communication device 1600 may include a circuit, which may realize the function of transmitting or receiving or communicating in the aforementioned method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and transceiver may also be manufactured by various IC process technologies, such as complementary metal oxide semiconductor (CMOS), negative channel metal oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a network device or a terminal, but the scope of the communication device described in the present disclosure is not limited to this, and the structure of the communication device may not be limited by Fig. 16. The communication device may be a stand-alone device or may be part of a large device. For example, the communication device may be:
(1) an independent integrated circuit IC, or a chip, or a chip system or subsystem;
(2) a set of one or more ICs, optionally, the set of ICs may also include storage components for storing data and computer programs;
(3) an ASIC, such as a modem;
(4) a module that may be embedded in another device;
(5) a receiver, a terminal, an intelligent terminal, a cellular phone, a wireless device, a handset, a mobile unit, a vehicle-mounted device, a network device, a cloud device, an artificial intelligence device, etc.
(6) others and so on.

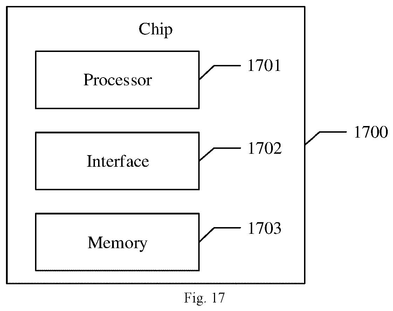

In a case that the communication device may be a chip or a chip system, reference may be made to a block diagram of a chip shown in Fig. 17. The chip shown in Fig. 17 includes a processor 1701 and an interface 1702. One or more processors 1701 may be arranged, and a plurality of interfaces 1702 may be arranged.

Optionally, the chip further includes a memory 1703 for storing necessary computer programs and data.

In some implementations, the chip may be used to realize the functions of the terminal in the embodiments of the present disclosure, and includes
an interface 1702 configured to: receive configuration information configured by a network device, and determine a first maximum retransmission number of multiple PRACH transmissions based on the configuration information; and perform the multiple PRACH transmissions according to the first maximum retransmission number.

In some implementations, the processor 1701 is configured to determine the first maximum retransmission number in one of the following ways:
the first maximum retransmission number is configured by the network device; or
the first maximum retransmission number is determined based on a protocol agreement; or
in a case that the first maximum retransmission number is not configured by the network device, the first maximum retransmission number is determined based on a protocol agreement.

In some implementations, the interface 1702 is further configured to receive a second maximum retransmission number of a legacy random access channel (RACH) and a transmission number of multiple PRACH transmissions of a single RACH attempt configured by the network device.

In some implementations, the processor 1701 is further configured to determine the first maximum retransmission number according to the second maximum retransmission number and the transmission number of the multiple PRACH transmissions of the single RACH attempt.

In some implementations, the processor 1701 is further configured to acquire a first ratio between the second maximum retransmission number and the transmission number of the multiple PRACH transmissions of the single RACH attempt; and determine the first maximum retransmission number according to the first ratio.

In some implementations, the interface 1702 is further configured to receive a set value configured by the network device.

In some implementations, the processor 1701 is further configured to determine a set value based on a protocol agreement.

In some implementations, the processor 1701 is further configured to: acquire a second ratio between the transmission number of the multiple PRACH transmissions of the single RACH attempt and the set value; acquire a third ratio between the second maximum retransmission number and the second ratio; and determine the third ratio as the first maximum retransmission number.

In some implementations, the interface 1702 is further configured to receive a second maximum retransmission number of a legacy RACH and an offset value configured by the network device.

In some implementations, the processor 1701 is further configured to determine the first maximum retransmission number according to the second maximum retransmission number and the offset value.

In some implementations, the interface 1702 is further configured to receive a second maximum retransmission number of a legacy RACH configured by the network device.

In some implementations, the processor 1701 is further configured to determine determining an offset value of the second maximum retransmission number based on a protocol.

In some implementations, the processor 1701 is further configured to determine the first maximum retransmission number according to the second maximum retransmission number and the offset value.

In some implementations, the processor 1701 is further configured to: determine a difference between the second maximum retransmission number and the offset value; and determine the difference as the first maximum retransmission number.

In some implementations, the interface 1702 is further configured to receive a second maximum retransmission number of a legacy RACH and a set coefficient configured by the network device.

In some implementations, the processor 1701 is further configured to determine the first maximum retransmission number according to the second maximum retransmission number and the set coefficient.

In some implementations, the interface 1702 is further configured to receive a second maximum retransmission number of a legacy RACH configured by the network device.

In some implementations, the processor 1701 is further configured to determine a set coefficient based on a protocol agreement.

In some implementations, the processor 1701 is further configured to determine the first maximum retransmission number according to the second maximum retransmission number and the set coefficient.

In some implementations, the processor 1701 is further configured to: determine a product of the second maximum retransmission number and the set coefficient; and determine the product as the first maximum retransmission number.

In some implementations, the interface 1702 is further configured to receive the first maximum retransmission number sent by the network device.

In some implementations, the interface 1702 is further configured to receive the configuration information sent by the network device through a radio resource control (RRC) or a system information block 1 (SIB1).

In some implementations, the interface 1702 is further configured to receive a candidate transmission number of multiple PRACH transmissions of a single RACH attempt and the first maximum retransmission number corresponding to the candidate transmission number configured by the network device. Different candidate transmission numbers correspond to different first maximum retransmission numbers.

In some implementations, the interface 1702 is further configured to receive a candidate transmission number of multiple PRACH transmissions of a single RACH attempt and a transmission resource amount corresponding to the candidate transmission number configured by the network device. Different candidate transmission numbers correspond to different transmission resource amounts.

In some implementations, before determining the first maximum retransmission number of the multiple PRACH transmissions, the processor 1701 is further configured to: in a case that a second maximum retransmission number of a legacy RACH is greater than a set threshold, determine the first maximum retransmission number according to a network configuration and/or a protocol agreement; or in a case that a second maximum retransmission number of a legacy RACH is less than or equal to a set threshold, determine the second maximum retransmission number as the first maximum retransmission number.

In some implementations, the chip may be used to realize the functions of the network device in the embodiments of the present disclosure, and includes:

an interface 1702 configured to send configuration information of multiple PRACH transmissions to a terminal, where the configuration information is used to determine a first maximum retransmission number of the multiple PRACH transmissions.

In some implementations, the interface 1702 is further used to configure the terminal with a second maximum retransmission number of a legacy RACH and a transmission number of multiple PRACH transmissions of a single RACH attempt.

In some implementations, the interface 1702 is further used to configure the terminal with a set value.

In some implementations, the interface 1702 is further configured to configure the terminal with a second maximum retransmission number of a legacy RACH and an offset value.

In some implementations, the interface 1702 is further configured to configure the terminal with a second maximum retransmission number of a legacy RACH and a set coefficient.

In some implementations, the interface 1702 is further configured to configure the terminal with the first maximum retransmission number.

In some implementations, the interface 1702 is further configured to configure the terminal with a candidate transmission number of multiple PRACH transmissions corresponding to a single RACH attempt and the first maximum retransmission number corresponding to the candidate transmission number. Different candidate transmission numbers correspond to different first maximum retransmission numbers.

In some implementations, the interface 1702 is further configured to configure the terminal with a candidate transmission number of multiple PRACH transmissions corresponding to a single RACH attempt and a transmission resource amount corresponding to the candidate transmission number. Different candidate transmission numbers correspond to different transmission resource amounts.

In some implementations, the interface 1702 is further configured to send the configuration information to the terminal through a RRC or an SIB1.

In this embodiment of the present disclosure, a dedicated first maximum retransmission number may be determined or configured separately for the multiple PRACH transmissions, and the resource conflict of the PRACH may be reduced by configuring the first maximum retransmission number separately, thereby improving the probability of the success access of the RACH attempt. Moreover, the first maximum retransmission number may be configured or determined to be less than the second maximum retransmission number of the legacy RACH, that is, the access probability of the terminal may be reduced, so that the waste of PRACH resources may be reduced and the interference time may be effectively reduced. Further, by reducing the access probability of the terminal, the energy consumption of the terminal may be reduced.

Those skilled in the art may also understand that various illustrative logical blocks and steps listed in the embodiments of the present disclosure may be implemented by electronic hardware, computer software, or a combination of both. Whether this function is realized by hardware or software depends on the specific application and the design requirements of the whole system. Those skilled in the art may use various methods to realize the described functions for each specific application, but this realization should not be understood to be beyond the scope of protection of the embodiments of the present disclosure.

An embodiment of the present disclosure also provides a communication system for multiple PRACH transmissions, which includes the communication device in the embodiment of Fig. 15 serving as a network device and the communication device in the embodiment of Fig. 15 serving as a terminal, or the system includes the communication device in the embodiment of Fig. 16 serving as a network device and the communication device in the embodiment of Fig. 16 serving as a terminal.

The present disclosure also provides a communication device, including a processor and an interface circuit. The interface circuit is used to receive code instructions and transmit them to the processor. The processor is used to execute the code instructions to perform the functions of any of the above method embodiments. The present disclosure also provides a readable storage medium, on which instructions are stored, which, when executed by a computer, realize the functions of any of the above method embodiments.

The present disclosure also provides a computer program product which, when executed by a computer, realizes the functions of any of the above method embodiments.

The above embodiments may be realized in whole or in part by software, hardware, firmware or any combination thereof. When implemented by software, it may be in whole or in part implemented in the form of a computer program product. The computer program product includes one or more computer programs. When the computer program is loaded and executed on a computer, the flow or function according to the embodiments of the present disclosure is generated in whole or in part. The computer may be a general-purpose computer, a special-purpose computer, a computer network, or other programmable devices. The computer program may be stored in a computer-readable storage medium or transmitted from one computer-readable storage medium to another. For example, the computer program may be transmitted from a website, computer, server or data center to another website, computer or data center in a wired (such as a coaxial cable, an optical fiber, a digital subscriber line (DSL)) manner or in a wireless (such as infrared, wireless, microwave, etc.) manner. The computer-readable storage medium may be any available medium that a computer may access or a data storage device such as a server, a data center and the like that contains one or more available media integrated. The usable medium may be a magnetic medium (e.g., a floppy disk, a hard disk, a magnetic tape), an optical medium (e.g., a high-density digital video disc (DVD)), or a semiconductor medium (e.g., a solid state disk (SSD)) and the like.

It may be understood by those skilled in the art that ordinal numbers such as first and second involved in the present disclosure are only for the convenience of description, but are not used to limit the scope of the embodiments of the present disclosure, and also not used to indicate the sequence.

The term "at least one" in the present disclosure may also be described as one or more, and the term "a plurality of" may be two, three, four or more, which is not limited in the present disclosure. In the embodiments of the present disclosure, for a technical feature, the technical features in the technical feature are distinguished by "first", "second", "third", "A", "B", "C" and "D", etc., and there is no order of precedence or size between the technical features described by the "first", "second", "third", "A", "B", "C" and "D".

The corresponding relationships shown in the tables in the present disclosure can be configured or predefined. The values of the information in each table are only examples and can be configured as other values, which are not limited by the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate deformation adjustments can be made based on the above table, such as splitting, merging, etc. The names of the parameters shown in the titles of the above tables can also use other names that can be understood by the communication device, and the values or representations of the parameters can also be other values or representations that can be understood by the communication device. When implementing the above tables, other data structures can also be used, such as arrays, queues, containers, stacks, linear lists, pointers, linked lists, trees, graphs, structures, classes, heaps, hash tables.

The predefinition in the present disclosure may be understood as definition, definition in advance, storage, pre-storage, pre-negotiation, pre-configuration, solidification, or pre-burning.

A person skilled in the art will appreciate that the units and algorithm steps of each example described in conjunction with the embodiments of the present disclosure can be implemented in electronic hardware, or a combination of computer software and electronic hardware. Whether these functions are performed in hardware or software depends on the specific application and design constraints of the technical solution. Professional and technical personnel can use different methods to implement the described functions for each specific application, but such implementation should not be considered to be beyond the scope of this disclosure.

A person skilled in the art can clearly understand that, for the convenience and brevity of description, for the specific working processes of the systems, devices and units described above reference can be made to the corresponding processes in the aforementioned method embodiments and details will not be repeated here.

The above is only specific embodiments of the present disclosure, but the protection scope of the present disclosure is not limited thereto. A person skilled in the art who is familiar with the technical field can easily think of changes or substitutions within the technical scope in the present disclosure, which should be included in the protection scope of the present disclosure. Therefore, the protection scope of the present disclosure should be based on the protection scope of the claims.

## Claims

1. A method for multiple physical random access channel (PRACH) transmissions, performed by a terminal, and comprising:
receiving configuration information configured by a network device, and determining a first maximum retransmission number of the multiple PRACH transmissions based on the configuration information; and
performing the multiple PRACH transmissions according to the first maximum retransmission number.

2. The method according to claim 1, wherein the first maximum retransmission number is determined in one of the following ways:
the first maximum retransmission number is configured by the network device; or
the first maximum retransmission number is determined based on a protocol agreement; or
in a case that the first maximum retransmission number is not configured by the network device, the first maximum retransmission number is determined based on a protocol agreement.

3. The method according to claim 1, further comprising:
receiving a second maximum retransmission number of a legacy random access channel (RACH) and a transmission number of multiple PRACH transmissions of a single RACH attempt configured by the network device; and
determining the first maximum retransmission number according to the second maximum retransmission number and the transmission number of the multiple PRACH transmissions of the single RACH attempt.

4. The method according to claim 3, further comprising:
acquiring a first ratio between the second maximum retransmission number and the transmission number of the multiple PRACH transmissions of the single RACH attempt; and
determining the first maximum retransmission number according to the first ratio.

5. The method according to claim 3, further comprising:
receiving a set value configured by the network device, or determining a set value based on a protocol agreement;
acquiring a second ratio between the transmission number of the multiple PRACH transmissions of the single RACH attempt and the set value;
acquiring a third ratio between the second maximum retransmission number and the second ratio; and
determining the third ratio as the first maximum retransmission number.

6. The method according to claim 1, further comprising:
receiving a second maximum retransmission number of a legacy RACH and an offset value configured by the network device; and
determining the first maximum retransmission number according to the second maximum retransmission number and the offset value.

7. The method according to claim 1, further comprising:
receiving a second maximum retransmission number of a legacy RACH configured by the network device;
determining an offset value of the second maximum retransmission number based on a protocol; and
determining the first maximum retransmission number according to the second maximum retransmission number and the offset value.

8. The method according to claim 6 or 7, further comprising:
determining a difference between the second maximum retransmission number and the offset value; and
determining the difference as the first maximum retransmission number.

9. The method according to claim 1, further comprising:
receiving a second maximum retransmission number of a legacy RACH and a set coefficient configured by the network device; and
determining the first maximum retransmission number according to the second maximum retransmission number and the set coefficient.

10. The method according to claim 1, further comprising:
receiving a second maximum retransmission number of a legacy RACH configured by the network device;
determining a set coefficient based on a protocol agreement; and
determining the first maximum retransmission number according to the second maximum retransmission number and the set coefficient.

11. The method according to claim 9 or 10, further comprising:
determining a product of the second maximum retransmission number and the set coefficient; and
determining the product as the first maximum retransmission number.

12. The method according to claim 1, further comprising:
receiving the first maximum retransmission number sent by the network device.

13. The method according to claim 12, further comprising:
receiving the configuration information sent by the network device through a radio resource control (RRC) or a system information block 1 (SIB1).

14. The method according to claim 12 or 13, further comprising:
receiving a candidate transmission number of multiple PRACH transmissions of a single RACH attempt and the first maximum retransmission number corresponding to the candidate transmission number configured by the network device, wherein different candidate transmission numbers correspond to different first maximum retransmission numbers.

15. The method according to claim 12 or 13, further comprising:
receiving a candidate transmission number of multiple PRACH transmissions of a single RACH attempt and a transmission resource amount corresponding to the candidate transmission number configured by the network device, wherein different candidate transmission numbers correspond to different transmission resource amounts.

16. The method according to claim 1, wherein before determining the first maximum retransmission number of the multiple PRACH transmissions, the method further comprises:
in a case that a second maximum retransmission number of a legacy RACH is greater than a set threshold, determining the first maximum retransmission number according to a network configuration and/or a protocol agreement; or
in a case that a second maximum retransmission number of a legacy RACH is less than or equal to a set threshold, determining the second maximum retransmission number as the first maximum retransmission number.

17. A method for multiple physical random access channel (PRACH) transmissions, performed by a network device, and comprising:
sending configuration information of the multiple PRACH transmissions to a terminal, wherein the configuration information is configured to determine a first maximum retransmission number of the multiple PRACH transmissions.

18. The method according to claim 17, further comprising:
configuring the terminal with a second maximum retransmission number of a legacy RACH and a transmission number of multiple PRACH transmissions of a single RACH attempt.

19. The method according to claim 18, comprising:
configuring the terminal with a set value.

20. The method according to claim 17, further comprising:
configuring the terminal with a second maximum retransmission number of a legacy RACH and an offset value.

21. The method according to claim 17, further comprising:
configuring the terminal with a second maximum retransmission number of a legacy RACH and a set coefficient.

22. The method according to claim 17, further comprising:
configuring the terminal with the first maximum retransmission number.

23. The method according to claim 22, further comprising:
configuring the terminal with a candidate transmission number of multiple PRACH transmissions corresponding to a single RACH attempt and the first maximum retransmission number corresponding to the candidate transmission number, wherein different candidate transmission numbers correspond to different first maximum retransmission numbers.

24. The method according to claim 22, further comprising:
configuring the terminal with a candidate transmission number of multiple PRACH transmissions corresponding to a single RACH attempt and a transmission resource amount corresponding to the candidate transmission number, wherein different candidate transmission numbers correspond to different transmission resource amounts.

25. The method according to any one of claims 17-24, further comprising:
sending the configuration information to the terminal through a radio resource control (RRC) or a system information block 1 (SIB1).

26. A communication device, comprising:
a transceiving module configured to: receive configuration information configured by a network device, and determine a first maximum retransmission number of multiple PRACH transmissions based on the configuration information; and perform the multiple PRACH transmissions according to the first maximum retransmission number.

27. A communication device, comprising:
a transceiving module configured to send configuration information of multiple PRACH transmissions to a terminal, wherein the configuration information is configured to determine a first maximum retransmission number of the multiple PRACH transmissions.

28. A communication device, comprising a processor and a memory, wherein the memory is configured to store a computer program, and the processor is configured to execute the computer program stored in the memory, to cause the communication device to perform the method according to any one of claims 1-16.

29. A communication device, comprising a processor and a memory, wherein the memory is configured to a computer program, and the processor is configured to execute the computer program stored in the memory, to cause the communication device to perform the method according to any one of claims 17-25.

30. A computer-readable storage medium for storing instructions which, when executed, cause the method according to any one of claims 1-16 to be performed.

31. A computer-readable storage medium for storing instructions which, when executed, cause the method according to any one of claims 17-25 to be performed.

32. A communication system, comprising:
a terminal configured to perform the method according to any one of claims 1-16; and
a network device configured to perform the method according to any one of claims 17-25.
